# EUROPEAN PATENT SPECIFICATION

(11) **EP 0 943 942 B1**
(45) Date of publication and mention of the grant of the patent: **14.11.2007**
(21) Application number: 99302173.2
(22) Date of filing: 19.03.1999
(51) Int. Cl.: G02B 6/38, G02B 6/36

(54) **Optical fiber array**
Optische Faseranordnung
Arrangement de fibres optiques

(30) Priority: 20.03.1998 JP 7207398; 08.03.1999 JP 6081999
(43) Date of publication of application: 22.09.1999
(73) Proprietor: NGK INSULATORS, LTD., Nagoya City, Aichi Pref. (JP)
(72) Inventor: Fukuyama, Masashi, Komaki-city, Aichi-prefecture 485-0822 (JP); Kurimoto, Hironori, Kounan-city, Archi-prefecture 483-8364 (JP)
(74) Representative: Paget, Hugh Charles Edward

(56) References cited:
- EP-A- 0 573 288
- EP-A- 0 760 488
- PATENT ABSTRACTS OF JAPAN vol. 1996, no. 01, 31 January 1996 (1996-01-31) -& JP 07 234321 A (HITACHI CABLE LTD), 5 September 1995 (1995-09-05)
- PATENT ABSTRACTS OF JAPAN vol. 1996, no. 07, 31 July 1996 (1996-07-31) -& JP 08 062432 A (KYOCERA CORP), 8 March 1996 (1996-03-08)

## Description

### Background of the Invention and Related Art Statement

The present invention relates to an optical fiber array formed by fixing optical fibers in V-shaped grooves.

In recent years, due to the increasing density of optical fibers, more and more fibers are used for planar waveguides (PLC). To avoid the increase in size of waveguide elements associated with the increasing number of fibers and to further increase the density, efforts are being made to reduce the conventional standard type waveguide pitch. To account for the increasing density of optical fibers and the decreasing waveguide pitch, efforts are also being made to reduce the inter-fiber pitch of fiber arrays connected to optical fibers.

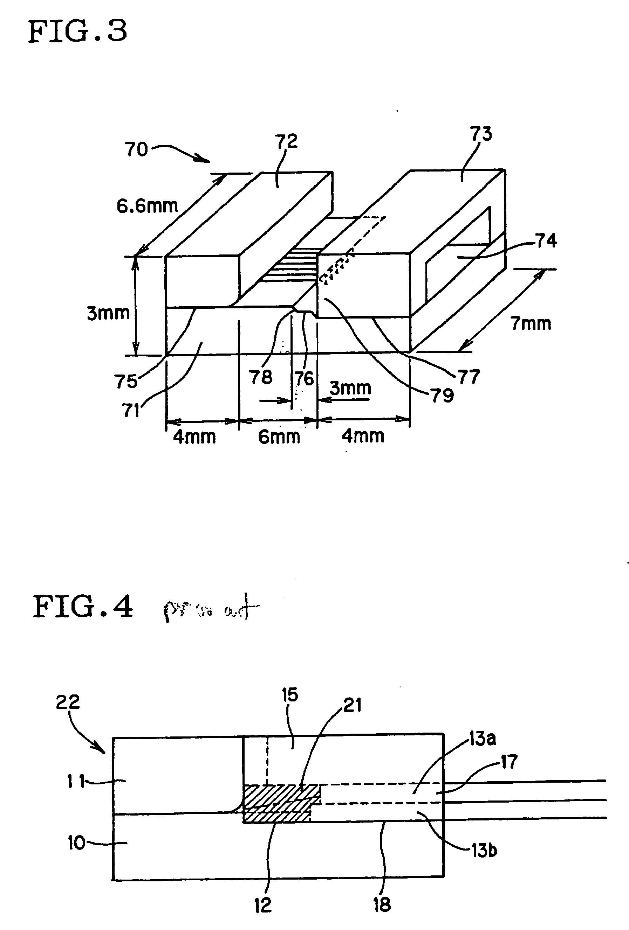

Fig. 4 shows an example of a half-pitch fiber array formed by reducing the conventional pitch down to about half.

In Fig. 4, a covered fiber housing substrate 15 is stuck and fixed to a lower substrate 10 having V-shaped grooves, from above a step section 12 of the lower substrate 10, and covered fibers 13a and 13b arranged in two stages are inserted through a covered housing groove 17 formed in the covered fiber housing substrate 15 so that the upper and lower fibers are alternately aligned in the V-shaped grooves. Then, an upper substrate (a fiber presser substrate) 11 is installed and fixed to the lower substrate 10 from above the V-shaped grooves 10 therein to form an optical fiber array 22.

However, in the optical fiber array of the above structure, an adhesive is used to fix non-covered optical fibers and covered optical fibers between the upper and lower substrates. A large amount of adhesive, however, is filled particularly in a portion over the step section 12 in the covered housing groove 17, so stress (distortion) caused by the hardening and contraction of the adhesive cannot be neglected.

Another prior art document, EP-A-573288 shows an optical fiber connector in which a lower plate has a stepped upper surface with V-grooves in the higher surface portion to receive the uncovered fiber portions. A first upper plate covers the V-grooves, and a second upper plate has an accommodation groove for the coated fiber portion. The second upper plate has an end abutting the step of the lower plate and has an adhesive injection port at this end, communicating with the accommodation groove.

JP-A-7-248424 shows a construction in which the uncoated fibers extend through a gap between a zone where the uncoated fibers are held in V-grooves of the lower plate by a first upper plate and a second zone where the coated fibers are held between a raised and grooved portion of the lower plate and a grooved second upper plate.

EP-A-859253 shows in its Fig. 19 a further construction in which a lower plate has two steps in its upper face. The uncovered fiber portions are held in V-grooves in the uppermost surface of the lower plate by an upper plate and by adhesive. The covered fiber portions lie over the lower most surface of the lower plate.

### Summary of the Invention

The present invention has been achieved in view of the problem stated above of stress due to the adhesive, and its object is to provide an optical fiber array that minimizes stress remaining therein after an adhesive is hardened to fix the optical fibers, thereby preventing damage to provide longtime reliability.

According to the present invention, there is provided an optical fiber array as set out in claim 1.

### Brief Description of the Drawings

Fig. 1 is a perspective view showing an example of a standard optical fiber array having covered fibers arranged in one stage, this array being shown as comparative to that of the invention.
Fig. 2 is a perspective view showing an example of a half-pitch optical fiber array having covered fibers arranged in two stages, also shown as comparative.
Fig. 3 is a perspective view showing another example of a half-pitch optical fiber array having covered fibers arranged in two stages according to this invention.
Fig. 4 is a front view showing an example of a conventional half-pitch fiber array.
Fig. 5 is an explanatory drawing showing a construction in which a fiber presser substrate has a reduced width.
Fig. 6 is an explanatory drawing showing a construction in which the fiber presser substrate and a lower substrate have the same width.

### Detailed Description of Preferred Embodiment

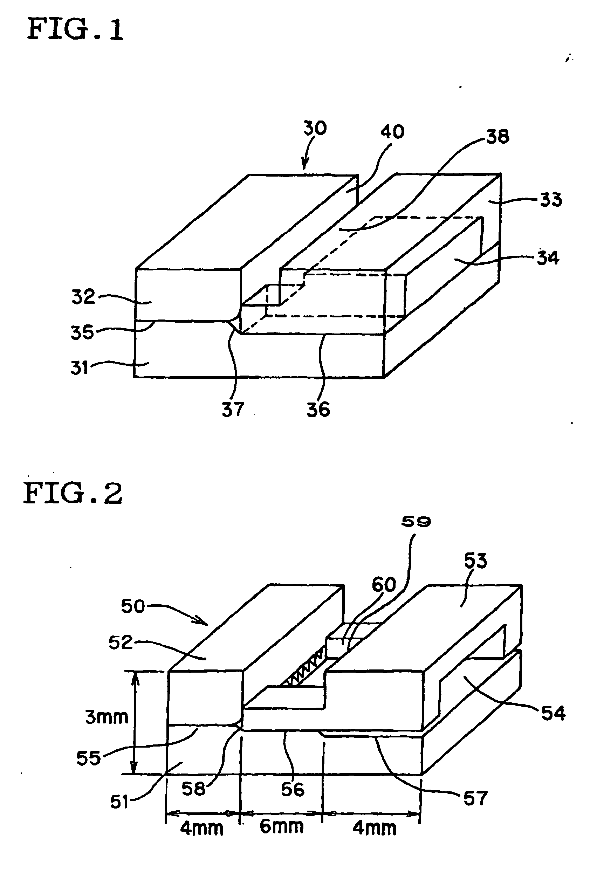

An embodiment of this invention and comparative constructions will be described below in detail with reference to the drawings. In Figs. 1 to 3, the detail of fibers and an adhesive is omitted to avoid complicated illustration.

Fig. 1 is a perspective view showing an example of a standard optical fiber array having one covered-fiber step provided in a lower substrate.

In Fig. 1, an optical fiber array 30 comprises a lower substrate 31 having V-shaped grooves formed in its surface, a fiber presser substrate 32 that is located above the V-shaped grooves in the lower substrate 31 to press non-covered (bare) optical fibers in the V-shaped grooves, and a covered fiber housing substrate 33 for pressing covered optical fibers. In addition, the lower substrate 31 comprises a V-shaped groove section 35 having V-shaped grooves in which optical fibers are aligned and arranged, a covered optical fiber support section 36 for supporting the covered optical fibers, and a V-shaped groove step section 37 located between the V-shaped groove section 35 and the covered optical fiber support section 36. The covered optical fibers are inserted through the covered housing groove 34 formed in the covered fiber housing substrate 33 so that the non-covered optical fibers at the tips of the fibers are aligned in the V-shaped grooves of the V-shaped groove section 35.

After the optical fibers have been inserted and located in the V-shaped grooves in this manner, an adhesive is filled in the gap between the fiber presser substrate 32 and covered fiber housing substrate 33 constituting the upper substrate, and the lower substrate 31, non-covered optical fibers, and covered optical fibers. Then, the substrates are normally irradiated with ultraviolet rays to harden the adhesive in order to complete the optical fiber array 30.

As described above, a large amount of adhesive is filled in the non-covered optical-fiber portion in the covered housing groove 34, particularly, from the V-shaped groove step section 37 to the cover-removed ends of the covered optical fibers, causing a large amount of stress (distortion) remaining after the adhesive has hardened and contracted.

In the optical fiber array 30, an open section 40 is formed in the top surface of the non-covered optical-fiber section of the covered fiber housing substrate 33 located between the V-shaped step section 37 and the cover-removed ends 38 of the covered optical fibers, as shown in Fig. 1.

The top surface of the non-covered optical fiber section is opened in this manner, so if the adhesive is hardened and contracted in this portion, the adhesive resin is deformed to minimize the generation of stress, thereby minimizing stress remaining the optical fiber array. As a result, losses caused by the stress of the covered fiber housing substrate and the fibers are prevented to provide an optical fiber array that has a longtime reliability.

Fig. 2 is a perspective view showing an example of a half-pitch optical fiber array having covered-fibers arranged in two stages.

In Fig. 2, an optical fiber array 50 comprises a lower substrate 51 having V-shaped grooves formed in its surface, a fiber presser substrate 52 located above the V-shaped grooves in the lower substrate 51 to press non-covered (bare) optical fibers in the V-shaped grooves, and a covered fiber housing substrate 53 for pressing covered optical fibers. In addition, the lower substrate 51 comprises a V-shaped groove section 55 having V-shaped grooves in which optical fibers are aligned and arranged, a first step section 56 that is a free buffer section, a covered optical fiber support section 57 for supporting the covered optical fibers, and a V-shaped groove step section 58 located between the V-shaped groove section 55 and first step section 56.

The covered optical fibers are inserted through the covered housing groove 54 formed in the covered fiber housing substrate 53 so that the non-covered optical fibers at the tips of the fibers are aligned in the V-shaped grooves of the V-shaped groove section 55. After the optical fibers have been inserted and located in the V-shaped grooves in this manner, an adhesive is filled in the gap between the fiber presser substrate 52 and covered fiber housing substrate 53 constituting the upper substrate, and the lower substrate 51, non-covered optical fibers, and covered optical fibers. Then, the substrates are normally irradiated with ultraviolet rays to harden the adhesive in order to complete the optical fiber array 50.

In this construction, in the lower substrate 51, the first step section 56 acting as a free buffer section continues with the covered optical fiber supporting section 57 via a step. The first step section 56 has no V-shaped grooves to eliminate the needs for positional restraints for aligning and arranging the fibers, so a taper can be obtained despite the presence of the pitch error of the covered optical fibers (tape fibers) to avoid problems such as the breakage of optical fibers.

Specifically, the length of the first step section 56 is preferably 5 mm or more because the bend radius of the fiber resulting from the covered optical fibers each of thickness 0.3 mm arranged in two stages is 200 mm or more, so that losses can be avoided to provide reliability. According to the embodiment in Fig. 2, the length of the first step section 56 was 6 mm. Although the width of the first step section 56 depends on the number fibers, a 24-half-pitch fiber array of width 7 mm was produced.

In the optical fiber array 50, an open section 60 was opened in the top surface of the non-covered optical fiber section of the covered fiber housing section 53 between a V-shaped step section 58 and the cover removed ends 59 of the covered optical fibers.

The top surface of the non-covered optical fiber section are opened in this manner like this, so despite the hardening and contraction of the adhesive, stress escapes from the open section 60 to minimize remaining stress to avoid losses, thereby providing an optical fiber array that has a longtime reliability.

Incidentally, in this construction, the substrate having V-shaped grooves is provided with a two-step difference in level, which is formed by three surfaces of the V-shaped groove section 55, the first step section 56, and the covered optical fiber support section 57.

When the substrate having V-shaped grooves has two surfaces (a one-step difference) of the V-shaped groove section 55 and the covered optical fiber support section 57, a free buffer section is arranged in the covered optical fiber support section 57. In other words, the covered optical fiber support section 57 supports the covered optical fibers in the rear part, and the non-covered (bare) optical fibers float in the front part of the covered optical fiber support section 57. In this case, an adhesive is filled in the gap between the covered optical fiber support section 57 and the lowest portion of the bare optical fibers, thereby stress due to shrinkage by hardening and thermal fluctuation is applied to the fibers, which may cause increase in loss, etc. Further, since it is difficult to position the covered optical fibers precisely in the longitudinal direction, the free buffer section may have variance in length, which makes control of a bending radius of the fibers difficult.

To avoid these problems, a volume of the adhesive to be filled in the gap between the covered optical fiber support section 57 and the lowest portion of the bare optical fibers is reduced by shortening the distance between the covered optical fiber support section 57 and the lowest portion of the bare optical fibers by providing the substrate having V-shaped grooves with a two-step difference in level in which the first step section 56 is a free buffer section. Further, the covered optical fibers is accurately positioned in the longitudinal direction by utilizing a portion having a difference in level which is formed by the first step section 56 and the covered optical fiber support section 57 for a positioning surface of the covered optical fibers, thereby a bending radius of the fibers can be accurately controlled.

Fig. 3 is a perspective view showing an example of a half-pitch optical fiber array having covered-fibers arranged in two stages according to this invention.

In Fig. 3, an optical fiber array 70 comprises a lower substrate 71 having V-shaped grooves formed in its surface, a fiber presser substrate 72 located above the V-shaped grooves in the lower substrate 71 to press non-covered (bare) optical fibers in the V-shaped grooves, and a covered fiber housing substrate 73 for pressing covered optical fibers, similarly as in Fig. 2. In addition, the lower substrate 71 comprises a V-shaped groove section 75 having V-shaped grooves in which optical fibers are aligned and arranged, a first step section 76 that is a free buffer section, a covered optical fiber support section 77 for supporting the covered optical fibers, and a V-shaped groove step section 78 located between the V-shaped groove section 75 and the first step section 76.

And the covered optical fibers are inserted through the covered housing groove 74 formed in the covered fiber housing substrate 73 so that the non-covered optical fibers at the tips of the fibers are aligned in the V-shaped grooves, and an adhesive is filled in the gap between the fiber presser substrate 72 and covered fiber housing substrate 73, and the lower substrate 71, non-covered optical fibers, and covered optical fibers. Then, the substrates are normally irradiated with ultraviolet rays to harden the adhesive in order to complete the optical fiber array 70.

In the construction of Fig. 2, the side end of the fiber presser substrate 52 that is the upper substrate contacts the V-shaped groove step section 58. This configuration is advantageous for alignment in assembling the fiber presser substrate 52. The upper substrate, however, has a relatively complicated shape to increase processing costs, and if constant processing quality is not maintained and particularly if the substrate is formed of glass, processing defects may occur to degrade quality. In addition, to prevent stress caused by the adhesive present in the gap between the covered fiber housing substrate 53 and the second step section 57 from acting on the covered fiber housing section 53 to degrade the longtime reliability and the reliability for harsh environments such as a temperature of -40°C, for example, the adhesive used for this portion must have a low Young's modulus.

Then, in the optical fiber array 70 according to the embodiment of Fig. 3, the fiber presser substrate 72 was configured to press the non-covered (bare) optical fibers in part of the V-shaped groove section 75 of the lower substrate 71 instead of the entire V-shaped groove section 75 and the covered fiber housing substrate 73 was configured to cover only the top of the covered optical fiber support section 77 of the lower substrate 71 for supporting the covered optical fibers, as shown in Fig. 3.

Accordingly, the top surface and sides of the non-covered optical fiber section between part of the V-shaped groove section 75 and the cover removed ends 79 of the covered optical fibers are opened. This portion serves to reduce the bending of the fibers caused by the arrangement of the covered optical fibers in two stages, and the length of this portion was 6 mm according to the embodiment in Fig. 3.

In addition, the first step section 76 according to this embodiment acts as a taper reduction section until the lower ones of the covered optical fibers arranged in two stages are mounted in the V-shaped grooves. In this case, the taper is a bend caused by the alignment error of the covered optical fibers and in case of standard covered optical fibers (ribbon fibers), corresponds to an offset of 0.1 mm (in an 8-fiber ribbon design in which the distance between the first and eighth fibers is 1.75 mm, the offset is 1.85 mm). To obtain a fiber bend radius of 20 mm or more to improve the reliability, the length must be 2 mm or more. Thus, it was 3 mm according to this invention.

Since a portion over part of the V-shaped groove section 7 and a portion over the first step section 76 are opened in this manner, the top surface and sides of the non-covered optical fiber section located between these portions are opened. Consequently, despite the hardening and contraction of the adhesive, the stress escapes from the open portion to minimize the remaining stress, as described above.

In addition, since the structure of the covered fiber housing structure is simplified as compared with the structure in Fig. 2, the optical fiber array 70 shown in Fig. 3 can be processed easily and implemented industrially effectively. Besides, in contrast to the construction shown in Fig. 2, there is almost no gap between the covered fiber housing substrate 73 and the second step portion (covered optical fiber support section) 77, thereby almost completely preventing the stress of the covered fiber housing substrate 73 caused by the adhesive.

Furthermore, an optical fiber array of an entirely open structure that does not have any covered fiber housing substrate is conventionally well known, but in this case, the application of bending (particularly, in the thickness direction) stress to the covered optical fibers causes the optical fibers to peel off at the adhesion section. As a result, the stress concentrates in the portion of the bare fibers that is pressed by the fiber presser substrate 72, possibly causing a broken fiber that is a critical defect. In addition, since the adhesive is entirely exposed to the exterior, this array is likely to degrade due to an external environment (in particular, humidity or temperature). On the contrary, in the optical fiber array in Fig. 3, the covered fiber housing substrate 73 can hold the covered optical fibers, so the peel-off caused by the bending stress can be prevented to provide a longtime reliability.

Also, in this embodiment, the substrate having V-shaped grooves was formed so as to have a two-step difference for the same purpose as the construction of Fig. 2.

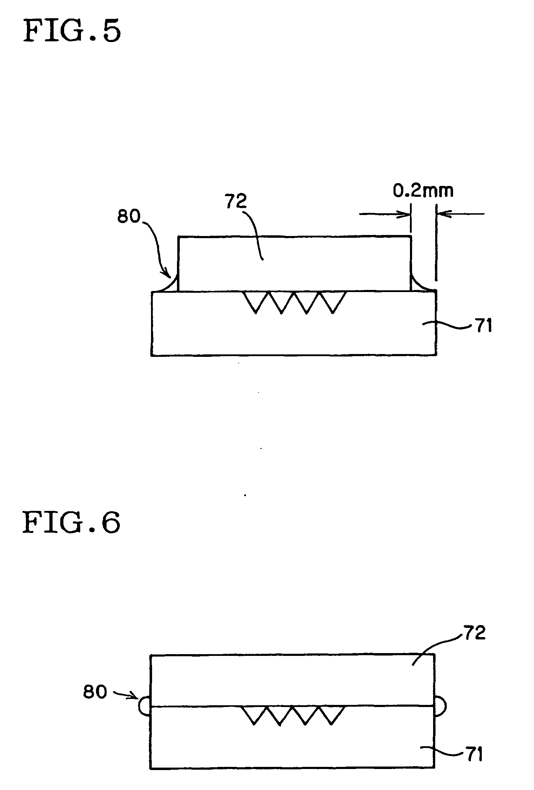

The embodiment shown in Fig. 3 does not have a guide function used in assembling the fiber presser substrate as in the construction in Fig. 2, but by forming the fiber presser substrate 72 so as to be smaller in the widthwise direction, as shown in Fig. 5, assembly can be achieved easily. Thus, this configuration is more preferable. That is, the fiber presser substrate 72 can be easily prevented from being protruded from the lower substrate 71 despite a lateral or rotational shift.

In addition, in the state of Fig. 5, the meniscus shape of the adhesive 80 approaches its ideal shape and the adhesive strength and reliability are improved, as compared with the case of the adhesive 80 in which the fiber presser substrate 72 and the lower substrate 71 have almost the same width.

Furthermore, depending on the used shape, the protruding adhesive may be a hindrance and must thus be removed. In this case, an extra removal operation is added and may cause defects, thereby degrading quality. However, by reducing the width of the fiber presser substrate 72, the shape of the adhesive 80 is formed as shown in Fig. 5 so that the protrusion can be prevented.

The width of the fiber presser substrate 72 may be set so as to be smaller than that of the lower substrate 71 by about 0.1 mm on the respective sides. In the construction in Fig. 5, the width of the lower substrate 71 is 7 mm, and the width of the fiber presser substrate 72 is shorter than that of the lower substrate 71 by 0.2 mm on the respective sides, that is, 6.6 mm.

As regards this, by reducing the width of the fiber housing substrate, the lateral alignment becomes easier and the adhesive strength increases.

Furthermore, for the conventional optical fiber array, the provision of a resin hole has been proposed as in Japanese Patent Publication No. 6-109952. If, however, the array is formed of glass, a defect may occur in the resin hole during processing to degrade the quality.

On the contrary, this invention opens the top of the free buffer section instead of the conventional resin hole to provide the same effects as in the resin hole while preventing the quality from being degraded during processing.

This invention is applicable not only to the half-pitch fiber array in Fig. 3 but also to the fiber array of a standard 250-µm pitch (one-stage ribbon fiber) in Fig. 1. In the latter case, the length of the free buffer section is preferably 2 mm or more.

The upper and lower substrates in which the optical fiber array according to this invention is formed are composed of a material through which light is transmitted, for example, glass material or plastic material.

As described above, this invention can provide an optical fiber array that minimizes the stress remaining in the array after the hardening of the adhesive to prevent losses in order to provide a longtime reliability.

## Claims

1. An optical fiber array having:
a lower substrate (71) having a first upper surface region (75) having V-grooves in which uncovered portions of optical fibers are arranged and held by means of an adhesive, and a second upper surface region (77) providing support for covered portions of said optical fibers;
a fiber pressing member (72) pressing the uncovered optical fiber portions in said V-grooves;
wherein, between said V-grooves and the ends of said covered portions of the fibers, said uncovered portions of the fibers extend through a space above a third upper surface region (76) of said lower substrate which space is open upwardly and at both lateral sides of the optical fiber array;
and wherein said lower substrate (71) is downwardly stepped via a V-grooved step section from said first upper surface region (75) over that third upper surface region to said second upper surface region (77) whereby said second upper surface region (77) is at a level below that of said first upper surface region (75), and wherein an adhesive is filled in the gaps between the fiber pressing member (72), and the lower substrate (71) and the uncovered optical fiber portions,
the array being **characterised in that** it comprises a fiber housing member (73) in which said covered portions of said fibers are housed, said fiber housing member contacting said second upper surface region at a contact zone which is at a lower level than said first upper surface region and wherein an adhesive is filled in the gaps between the fiber housing member and the lower substrate and the covered optical fiber portions.

2. An optical fiber array according to claim 1, wherein said lower substrate has first and second successive downward steps (78) between said first and second upper surface regions (75, 77), said third upper surface region (76) being between said two steps (78).

3. An optical fiber array according to claim 2, wherein said fiber housing member (73) contacts said second downward steep.

4. An optical fiber array according to claim 2 or 3, wherein said first and second downward steps (78) are sloping steps.

5. An optical fiber array according to any one of claims 1 to 4, wherein the length of said open space above said third upper surface region (76) is such as to allow said fibers to have a bend radius of 20 mm or more.

6. The optical fiber array according to any one of claims 1 to 5, wherein the length and width of the fiber pressing member (72) are smaller than the length and width of said first upper surface region (71) of the lower substrate.

7. The optical fiber array according to claim 1, wherein the width of the fiber housing member (73) is smaller than the width of said first upper surface region (71) of the lower substrate.

8. The optical fiber array according to any one of claims 1 to 7, wherein the length, in the axial direction of the fibers, of said space is at least 2 mm.

## Patentansprüche

1. Optische Faseranordnung, umfassend:
ein unteres Substrat (71) mit einem ersten oberen Oberflächenbereich (75) mit V-Rillen, in denen nicht abgedeckte Abschnitte von optischen Fasern angeordnet sind und mithilfe eines Klebemittels gehalten sind, sowie einem zweiten oberen Oberflächenbereich (77), der eine Auflage für abgedeckte Abschnitte der optischen Fasern bereitstellt,
ein Faserpresselement (72) zum Pressen der nicht abgedeckten optischen Faserabschnitte in die V-Rillen,
worin zwischen den V-Rillen und den Enden der abgedeckten Abschnitte der Fasern die nicht abgedeckten Abschnitte der Fasern sich durch einen Raum oberhalb eines dritten oberen Oberflächenbereichs (76) des unteren Substrats erstrecken, welcher Raum nach oben und an beiden Seiten der optischen Faseranordnung offen ist,
und worin das untere Substrat (71) über einen V-Rillen-Stufenabschnitt vom ersten oberen Oberflächenbereich (75) über den dritten oberen Oberflächenbereich zum zweiten oberen Oberflächenbereich (77) hin nach unten abgestuft ist, wodurch sich der zweite obere Oberflächenbereich (77) an einem unterhalb des Niveaus des ersten oberen Oberflächenbereichs (75) liegenden Niveau befindet und worin ein Klebemittel in die Spalte zwischen dem Faserpresselement (72), dem unteren Substrat (71) und den nicht abgedeckten optischen Faserabschnitten gefüllt ist,
wobei die Anordnung **dadurch gekennzeichnet ist, dass** sie ein Faseraufnahmeelement (73) umfasst, in dem die abgedeckten Abschnitte der Fasern aufgenommen sind, wobei das Faseraufnahmeelement den zweiten oberen Oberflächenbereich in einem Kontaktbereich berührt, der sich an einem unterhalb des Niveaus des ersten oberen Oberflächenbereichs liegenden Niveau befindet und worin ein Klebemittel in die Spalte zwischen dem Faseraufnahmeelement und dem unteren Substrat und den abgedeckten Faserabschnitten gefüllt ist.

2. Optische Faseranordnung nach Anspruch 1, worin das untere Substrat eine erste und eine zweite aufeinanderfolgende Abwärtsstufe (78) zwischen dem ersten und dem zweiten oberen Oberflächenbereich (75, 77) aufweist, wobei der dritte obere Oberflächenbereich (76) zwischen den beiden Stufen (78) angeordnet ist.

3. Optische Faseranordnung nach Anspruch 2, worin das Faseraufnahmeelement (73) die zweite Abwärtsstufe berührt.

4. Optische Faseranordnung nach Anspruch 2 oder 3, worin die erste und die zweite Abwärtsstufe (78) geneigte Stufen sind.

5. Optische Faseranordnung nach einem der Ansprüche 1 bis 4, worin die Länge des offenen Raums oberhalb des dritten Oberflächenbereichs (76) dermaßen ist, dass den Fasern ermöglicht wird, einen Krümmungsradius von 20 mm oder mehr aufzuweisen.

6. Optische Faseranordnung nach einem der Ansprüche 1 bis 5, worin die Länge und die Breite des Faserpresselements (72) kleiner als die Länge und Breite des ersten oberen Oberflächenbereichs (71) des unteren Substrats sind.

7. Optische Faseranordnung nach Anspruch 1, worin die Breite des Faseraufnahmeelements (73) kleiner als die Breite des ersten oberen Oberflächenbereichs (71) des unteren Substrats ist.

8. Optische Faseranordnung nach einem der Ansprüche 1 bis 7, worin die Länge des Raumes in die axiale Richtung der Fasern zumindest 2 mm ist.

## Revendications

1. Réseau de fibres optiques comprenant :
un substrat inférieur (71) ayant une première région de surface supérieure (75) comportant des rainures en V dans lesquelles des portions découvertes des fibres optiques sont agencées et maintenues au moyen d'un adhésif, et une deuxième région de surface supérieure (77) formant un support pour des portions couvertes desdites fibres optiques ;
un organe de pressage de fibre (72) pressant les portions découvertes des fibres optiques dans lesdites rainures en V ;
dans lequel, entre lesdites rainures en V et les extrémités desdites portions couvertes des fibres, lesdites portions découvertes des fibres s'étendent à travers un espace au-dessus d'une troisième région de surface supérieure (76) dudit substrat inférieur, lequel espace est ouvert vers le haut et au niveau des deux côtés latéraux du réseau de fibres optiques ;
et dans lequel ledit substrat inférieur (71) est étagé vers le bas via une section d'étage trapézoïdale de ladite première région de surface supérieure (75) sur cette troisième région de surface supérieure à ladite deuxième région de surface supérieure (77), moyennant quoi ladite deuxième région de surface supérieure (77) est à un niveau inférieur au niveau de ladite première région de surface supérieure (75), et dans lequel un adhésif remplit les espaces entre l'organe de pressage de fibre (72), le substrat inférieur (71) et les portions découvertes des fibres optiques,
le réseau étant **caractérisé en ce qu'**il comprend un organe de logement de fibre (73) dans lequel lesdites portions couvertes desdites fibres sont logées, ledit organe de logement de fibre étant en contact avec ladite deuxième région de surface supérieure au niveau d'une zone de contact qui est à un niveau inférieur à ladite première région de surface supérieure et dans lequel un adhésif remplit les espaces entre l'organe de logement de fibre, le substrat inférieur et les portions couvertes des fibres optiques.

2. Réseau de fibres optiques selon la revendication 1, dans lequel ledit substrat inférieur comporte des premier et second étages successifs dirigés vers le bas (78) entre lesdites première et deuxième régions de surface supérieure (75, 77), ladite troisième région de surface supérieure (76) étant entre lesdits deux étages (78).

3. Réseau de fibres optiques selon la revendication 2, dans lequel ledit organe de logement de fibre (73) est en contact avec ledit second étage dirigé vers le bas.

4. Réseau de fibres optiques selon la revendication 2 ou 3, dans lequel lesdits premier et second étages dirigés vers le bas (78) sont des étages inclinés.

5. Réseau de fibres optiques selon l'une quelconque des revendications 1 à 4, dans lequel la longueur dudit espace ouvert au-dessus de ladite troisième région de surface supérieure (76) permet auxdites fibres d'avoir un rayon de pliage de 20 mm ou plus.

6. Réseau de fibres optiques selon l'une quelconque des revendications 1 à 5, dans lequel la longueur et la largeur de l'organe de pressage de fibre (72) sont inférieures à la longueur et à la largeur de ladite première région de surface supérieure (71) du substrat inférieur.

7. Réseau de fibres optiques selon la revendication 1, dans lequel la largeur de l'organe de logement de fibre (73) est inférieure à la largeur de ladite première région de surface supérieure (71) du substrat inférieur.

8. Réseau de fibres optiques selon l'une quelconque des revendications 1 à 7, dans lequel la longueur, dans la direction axiale des fibres, dudit espace est d'au moins 2 mm.
